(19) **Europäisches Patentamt**

**European Patent Office**

**Office européen des brevets**

(11) **EP 1 165 843 B1**

(12) **FASCICULE DE BREVET EUROPEEN**

(45) Date de publication et mention
de la délivrance du brevet:
**16.06.2004 Bulletin 2004/25**

(51) Int Cl.⁷: **C13D 1/00**, C13D 3/16,
A23L 2/74, A23L 2/84

(21) Numéro de dépôt: **00915225.7**

(22) Date de dépôt: **27.03.2000**

(86) Numéro de dépôt international:
**PCT/FR2000/000765**

(87) Numéro de publication internationale:
**WO 2000/058525 (05.10.2000 Gazette 2000/40)**

(54) **PROCEDE D'OBTENTION D'UN JUS FRAIS DE CANNE A SUCRE**

VERFAHREN ZUR HERSTELLUNG EINES FRISCHEN ZUCKERROHRSAFTES

METHOD FOR OBTAINING A SUGARCANE-BASED FRUIT JUICE

(84) Etats contractants désignés:
**AT BE CH CY DE DK ES FI FR GB GR IE IT LI LU
MC NL PT SE**

(30) Priorité: **29.03.1999 FR 9903896**

(43) Date de publication de la demande:
**02.01.2002 Bulletin 2002/01**

(73) Titulaire: **INSTITUT NATIONAL DE LA
RECHERCHE AGRONOMIQUE (INRA)
75341 Paris Cédéx 07 (FR)**

(72) Inventeurs:
• **FAHRASMANE, Louis
F-97139 Les Abymes (FR)**
• **CATHERINE, Max
F-97230 Sainte-Marie (FR)**

(74) Mandataire: **Catherine, Alain et al
Cabinet Harlé & Phélip
7, rue de Madrid
75008 Paris (FR)**

(56) Documents cités:
**EP-A- 0 095 202          FR-A- 2 616 045
GB-A- 2 113 247**

• **X.LANCRENON ET AL.: "Impact des
technologies de séparation sur la nouvelle
raffinerie de canne" INDUSTRIES
ALIMENTAIRES ET AGRICOLES, - août 1998
(1998-08) pages 75-78, XP000856858 cité dans la
demande**

**Description**

La présente invention concerne un procédé d'obtention d'un jus frais de canne à sucre à propriétés améliorées, ce jus présentant notamment une excellente stabilité et étant apte à la préparation de boissons alimentaires.

La canne à sucre est un végétal du genre *Saccharum,* et ses transformations traditionnelles font partie du patrimoine des pays de l'Amérique Latine.

Une des transformations traditionnelles, la production de jus de canne à sucre, est restée dans le domaine de l'économie informelle. C'est une activité artisanale. Ce produit, qui présente une très grande fragilité, est consommé dans des délais très courts, en général quelques heures après son obtention. Le manque total de stabilité du jus de canne à sucre frais ne permet pas son transport vers des lieux de consommation au-delà d'un rayon restreint par rapport à son lieu de production.

Pourtant, ce produit occupe une place non négligeable dans la consommation de boissons rafraîchissantes sans alcool, notamment en Martinique et en Guadeloupe, ainsi qu'en Asie du Sud et en Amérique Latine.

Les problèmes de conservation sont la principale cause de son absence des rayons de la distribution moderne.

L'absence de stabilité à la conservation du jus de canne à sucre frais se traduit notamment par une altération prononcée de ses propriétés organoleptiques dès quelques heures après l'obtention du jus par broyage, par un brunissement prononcé du jus, par une forte contamination d'origine bactérienne et/ou fongique et par l'apparition très rapide d'une phase colloïdale rendant ce produit impropre à la préparation de boissons.

Plusieurs procédés de préparation de boissons à longue conservation à base de jus de canne à sucre sont décrits dans l'état de la technique.

Ainsi, l'article de BHUPINDER et al. (1991) décrit un procédé dont les étapes principales sont les suivantes:

(1) broyage des tiges de canne afin d'extraire le jus de canne à sucre frais;
(2) addition de jus de citron (3%) et de gingembre (1%);
(3) pasteurisation du jus à 80°C pendant 10 minutes;
(4) addition de 70 ppm/l de $SO_2$;
(5) embouteillage puis stérilisation pendant 30 minutes.

Malheureusement, des pertes importantes en saccharose et une augmentation significative de l'acidité totale des produits obtenus selon le procédé de BHUPINDER et al. rendent impropre cette boisson pour une conservation à long terme.

Les auteurs incriminent la bactérie *Leuconostoc mesenteroïdes* comme le principal agent responsable de la perte en sucre, de l'acidification et de l'augmentation de la viscosité au cours du stockage.

L'article de SIVASUBRAMANIAN et PAI (1994) divulgue un procédé d'obtention de jus de canne à sucre comprenant une première étape de blanchiment à la vapeur des cannes, pelées ou non pelées, dans une enceinte à pression atmosphérique avant l'étape de broyage.

Le jus de canne résultant de l'étape de broyage est alors mélangé à du jus de citron jusqu'à atteindre un pH de 3,6, ainsi qu'avec 0,75% de jus de gingembre. L'addition de jus de citron et de jus de gingembre a pour but d'améliorer à la fois la saveur du produit et sa stabilité microbiologique.

Le mélange résultant est alors pasteurisé par chauffage à la flamme, injection de vapeur ou par HTST (High Temperature Short Time).

Les deux procédés de préparation de jus de canne à sucre décrits ci-dessus comprennent une étape de traitement thermique (pasteurisation), qui génère des substances affectant les qualités organoleptiques du produit final et qui, en outre, confère à ce dernier une instabilité significative le rendant impropre à une conservation à long terme.

On a maintenant trouvé selon l'invention que du jus de canne à sucre frais présentant une bonne stabilité de conservation, sensiblement exempt de micro-organismes viables et de particules colloïdales et possédant des propriétés organoleptiques le rendant apte à la préparation de boissons , pouvait être obtenu par un procédé comportant au moins une étape de microfiltration ou d'ultrafiltration tangentielle de l'extrait brut de canne issu d'une pression à sec.

On connaît déjà dans l'état de la technique des procédés utilisant l'ultrafiltration ou la microfiltration tangentielle pour la préparation de produits de transformation dans l'industrie sucrière.

Ainsi, PUNIDADAS (1990) mentionne un procédé d'obtention de jus de canne destiné à l'industrie sucrière comportant une étape d'ultrafiltration sur membrane organique.

En particulier, l'ultrafiltration est réalisée à partir de jus de canne chaulé, c'est-à-dire débarrassé de la majorité des composants non saccharidiques qui ont été précipités au moment du traitement par chaulage.

De même, une étude de KISHIHARA et al. (1989) décrit une étape d'ultrafiltration sur une membrane en alumine de taille de pore moyenne de 0,05 µm à partir de jus de canne chaulé ou non. Il est observé selon cette étude que le flux de filtrage décroît rapidement dans les premières 30 min. de filtration.

L'article de HERVE (1994) décrit un procédé dans lequel le jus est tout d'abord clarifié puis ultrafiltré sur membrane minérale, avant d'être décalcifié sur des résines cationiques puis concentré par évaporation et enfin cristallisé.

Enfin, un article de LANCRENON et al. (1998) divulgue un procédé de raffinage de sucre de canne comprenant une étape de microfiltration tangentielle de jus de canne à 95°C, destinée à améliorer la qualité du sucre produit.

La microfiltration tangentielle utilisée dans les premières étapes du procédé de raffinage du sucre est opérée dans des conditions visant à optimiser le débit de filtration, c'est-à-dire dans lesquelles le jus de canne à sucre à filtrer possède une viscosité la plus réduite possible. En conséquence, la microfiltration, telle qu'effectuée dans l'industrie sucrière, est réalisée à partir de jus de canne ayant subi un prétraitement visant à éliminer du produit brut initial de nombreuses impuretés ainsi que des composés non saccharidiques indésirables, par exemple par précipitation de ces derniers au cours d'une étape de chaulage ou de carbonatation.

En outre, les procédés conventionnels d'extraction du jus de canne à destination de l'industrie sucrière ont recours à une imbibition préalable des tiges de canne à sucre avec de l'eau ou encore avec une partie d'un extrait brut issu du broyage, ce qui augmente le rendement de l'extraction du jus par broyage des tiges de cannes ainsi imbibées et a pour effet de diluer l'extrait brut résultant, réduisant significativement sa viscosité et favorisant ainsi l'efficacité de l'étape de filtration tangentielle.

Le prétraitement du jus de canne brut, d'une part, réduit sa viscosité initiale et, d'autre part, diminue fortement le risque de colmatage du filtre lors de l'étape de microfiltration et d'ultrafiltration subséquentes. En outre, les étapes d'ultrafiltration et/ou microfiltration sont réalisées à haute température (80°C à 95°C) de manière à réduire encore la viscosité du produit et ainsi augmenter les débits de filtration. Les étapes de prétraitement du jus de canne à sucre ainsi que le chauffage à haute température du produit prétraité avant filtration n'entraînent pas d'inconvénient lorsque l'objectif final est la cristallisation du sucre, dans la mesure où les propriétés organoleptiques de l'ultrafiltrat ou du microfiltrat ne revêtent aucune importance.

Au contraire, la mise au point d'un procédé d'obtention de jus de canne à sucre frais en vue de la préparation de boissons ne devait pas comporter d'étapes susceptibles de modifier sensiblement les propriétés organoleptiques du produit final.

Ainsi, tout traitement de l'extrait brut de jus de canne préalable à l'étape de filtration tangentielle visant à éliminer les impuretés et/ou composés indésirables doit être exclu. En outre, un chauffage à haute température (supérieur à 80°C) visant à augmenter la viscosité de l'extrait brut afin d'améliorer les performances de l'étape de filtration ne peut être appliqué dans un procédé de préparation de jus de canne à sucre frais pour la consommation humaine. Un trop grand chauffage de l'extrait brut altère de manière importante le goût du produit final et affecte significativement son apparence, notamment du fait d'un brunissement prononcé peu attirant pour le consommateur.

GB-A-2 113 247 enseigne un procédé de purification de jus de canne, comprenant l'obtention de jus de canne brut à partir de canne à sucre, et une étape d'ultrafiltration dudit jus de canne, ainsi réduisant la turbidité et la contamination bactérienne du produit. L'ultrafiltration peut être effectuée à une température de 20°C à 100°C, en particulier 60°C à 100°C. Le jus de canne brut peut être obtenu par broyage de canne à sucre, étant la méthode conventionnelle, notamment une pression à sec.

De manière surprenante, le demandeur a montré selon l'invention que la microfiltration tangentielle pouvait être appliquée avec succès au traitement de l'extrait brut de jus de canne à sucre obtenu sans imbibition préalable en vue de l'obtention d'une fraction de filtrat de jus de canne à sucre débarrassé de la majorité des particules colloïdales ainsi que de la quasi totalité des micro-organismes viables présents dans l'extrait brut initial.

Ainsi, un premier objet de l'invention consiste en un procédé d'obtention d'un jus frais de canne à sucre présentant notamment une bonne stabilité de conservation et apte à la préparation de boissons pour la consommation humaine, caractérisé en ce qu'il comporte au moins une étape de filtration tangentielle d'un extrait brut de canne à sucre issu d'une pression à sec.

Par « filtration tangentielle » au sens de la présente invention, on entendra une microfiltration tangentielle. Classiquement, on entendra par « microfiltration tangentielle », une filtration tangentielle opérée avec une membrane filtrante dont les caractéristiques sont définies notamment en terme de « diamètre moyen de pore ».

Le procédé selon l'invention est en outre caractérisé en ce que l'étape de filtration tangentielle est réalisée avec une membrane filtrante d'un seuil de coupure compris entre 50 kg/mol et 150 kg/mol ou d'un diamètre moyen de pore compris entre 0,05 et 0,2µm, de préférence entre 0,09 et 0,17µm et de manière tout à fait préférée d'environ 0,14 µm.

De manière surprenante, l'étape de filtration tangentielle selon le procédé de l'invention permet d'obtenir des débits de filtrats comparables à ce qui est obtenu dans d'autres industries de la boisson, en particulier celles des jus de fruits, en l'absence de tout prétraitement par chaulage ou carbonatation de l'extrait brut de canne. Ainsi, des débits de 200 l x h$^{-1}$ x m$^{-2}$ ont été obtenus en utilisant une membrane filtrante ayant un diamètre moyen de pore de 0,14 µm.

En outre, l'étape de filtration tangentielle du procédé selon l'invention permet d'obtenir du jus de canne clarifié avec un titre en micro-organismes viables considérablement réduit. Les observations relatives à la réduction du nombre de micro-organismes montrent même qu'après filtration, pour des jus obtenus sur membranes filtrantes ayant un diamètre moyen de pore de 0,2μm ou un diamètre moyen de pore inférieur, aucun micro-organisme n'a été détecté dans le microfiltrat. Les microfiltrats présentent ainsi des caractéristiques sanitaires considérablement améliorées par rapport au jus brut.

Les filtrats présentent parfois une phase colloïdale, ce phénomène étant surtout observé après filtration avec une membrane filtrante ayant un diamètre moyen de pore de 0,2μm. En revanche, l'utilisation de membranes filtrantes ayant un seuil de coupure inférieur, telles que les membranes filtrantes ayant un diamètre moyen de pore de 0,14 μm ou encore des membranes filtrantes ayant un seuil de coupure de 150 kg/mol ou inférieur permettent l'obtention d'un microfiltrat pratiquement exempt de particules colloïdales, ce qui se traduit au plus par la rare formation d'un fin dépôt, comparable au dépôt qui peut être retrouvé dans certaines boissons commerciales, notamment à base de jus de fruits.

Dans tous les cas, l'étape de microfilration tangentielle permet de réduire d'environ trente fois la turbidité du jus de canne à sucre. Il a en outre été montré qu'un vieillissement accéléré du filtrat à haute température n'induisait pas d'accroissement significatif de la turbidité de ce filtrat, même après 30 minutes d'incubation à 100°C.

Avantageusement, l'étape de filtration tangentielle est réalisée à une température comprise entre 40°C et 65°C, de préférence entre 45°C et 60°C et de manière tout à fait préférée à environ 55°C.

Le recours à un chauffage léger de l'extrait brut de canne à sucre permet d'améliorer les propriétés de viscosité du produit destiné à la microfiltration. Dans les conditions de températures décrites ci-dessus, il n'a été observé aucune altération des propriétés organoleptiques du jus de canne à sucre.

De préférence, la durée d'un cycle de filtration est comprise entre 2 et 8 heures. Avec une membrane filtrante ayant un diamètre moyen de pore de 0,14 μm, la durée du cycle de filtration est avantageusement d'environ 2 heures.

La pression transmembranaire appliquée au cours de l'étape de filtration est comprise entre 0,5 et 2 bars et est préférentiellement d'environ 1 bar.

L'étape de filtration du procédé selon l'invention peut être réalisée avec tout type de membrane filtrante. Toutefois, un colmatage important et en profondeur des membranes organiques a été souvent observé. Avec des membranes filtrantes organiques, les densités de flux maximum étaient de 30 à 40 lx h$^{-1}$ x m$^{-2}$.

C'est pourquoi l'étape de filtration du procédé selon l'invention est réalisée avantageusement avec une membrane filtrante de type inorganique, par exemple en céramique.

Selon une caractéristique avantageuse du procédé selon l'invention, l'étape de filtration tangentielle est précédée d'une étape de traitement thermique de la canne entière avant broyage.

Lors du broyage, se produit une décompartimentation cellulaire provoquant la mise en contact des polyphénol oxydases et de leurs substrats. Une fois la canne broyée, le jus qui en résulte est ainsi le siège de phénomènes de brunissement généralement intenses et rapides. Le pH du jus brut (environ 5,2), est proche du pH optimum des polyphénol oxydases (PPO), ce qui pourrait expliquer en partie la rapidité et l'intensité du phénomène de brunissement. L'activité catalytique des PPO présentes dans les tiges de canne à sucre consiste notamment en une oxydation de phénols comme la tyrosine, le catéchol, la DOPA, le pyrogallol, le p-crésol ou encore l'hydroquinone. Un substrat spécifique de cette enzyme est l'acide chlorogénique. Ces enzymes sont rapidement dénaturées à la température de 55°C.

Un traitement thermique des tiges de canne entières avant l'obtention de l'extrait brut de jus de canne permet de diminuer fortement, et même dans certains cas de bloquer complètement, le phénomène de brunissement qui est dû en partie à l'action catalytique d'enzymes telles que les polyphénol oxydases.

L'étape de traitement thermique des tiges de canne à sucre entières selon le procédé de l'invention peut consister en un traitement à la vapeur, par exemple dans un autoclave avec de la vapeur fluente. Toutefois, le traitement thermique à la vapeur possède l'inconvénient d'agir d'abord en surface. L'inactivation totale de l'activité biologique des polyphénols oxydases présentes dans les tiges de canne à sucre implique donc un traitement prolongé à la vapeur de nature à induire un brunissement non enzymatique de l'extrait de canne brut.

De manière avantageuse, l'étape de prétraitement thermique du procédé selon l'invention consiste en un traitement des tiges de canne entières par micro-ondes. Dans ce cas, le chauffage de la matière humide a lieu de manière uniforme et en profondeur, ce qui permet d'inactiver la totalité des polyphénol oxydases initialement présentes sans provoquer le phénomène de brunissement non enzymatique dû à un excès de chaleur décrit ci-dessus.

Préférentiellement, le traitement par micro-ondes est réalisé pendant une durée comprise entre 6 à 12 minutes, à la puissance de 1250 Watts.

Le procédé d'obtention d'un jus frais de canne à sucre selon l'invention peut être appliqué indifféremment à toutes les cannes à sucre domestiques du genre *Saccharum.* Parmi celles-ci on peut notamment citer des variétés hybrides interspécifiques artificiels *Saccharum Spp, les* espèces *Saccharum officinarum, Saccharum barberi* et *Saccharum sinense.*

On aura avantageusement recours à la variété de canne B8008 (Baron et al., 1996), à la variété R570.

Les références des variétés de canne à sucre citées dans la présente description sont conformes à la nomenclature internationale. Elles peuvent être obtenues notamment auprès de la Collection du CIRAD (CA- Rougeol 97 1710 - Petit-Bourg-Guadeloupe, FRANCE).

De préférence, on utilisera une variété de canne à sucre ayant des caractéristiques d'acidité plus grandes que les cannes à sucre classiquement utilisées dans l'industrie sucrière.

Le jus de canne à sucre frais obtenu selon le procédé de l'invention peut être utilisé directement en tant que boisson rafraîchissante, le cas échéant après pasteurisation, par exemple à 65°C pendant 20 minutes et conditionnement adéquat, l'étape de pasteurisation pouvant cependant être omise compte-tenu de la fonction de stérilisation de l'étape de microfiltration.

Selon un autre mode de réalisation, le jus de canne à sucre frais selon l'invention peut être gazéifié à l'aide d'un dispositif de gazéification connu de l'homme du métier, de manière à obtenir une boisson rafraîchissante gazéifiée, comprenant par exemple une teneur en $CO_2$ de 2,4 g/l.

Le jus de canne à sucre frais susceptible d'être obtenu selon le procédé de l'invention peut également être acidifié à l'aide d'un concentré de jus de citron de manière à stabiliser le pH à une valeur d'environ 4,5 puis être, le cas échéant, pasteurisé, par exemple à 65°C pendant 20 minutes, pour une conservation à température ambiante.

L'étape d'acidification à un pH d'environ 4,5 peut aussi être réalisée à l'aide d'un apport en acide citrique ou en acide matique.

Le jus de canne à sucre frais susceptible d'être obtenu selon le procédé de l'invention peut également subir une étape de fermentation, par exemple par fermentation lactique, dans le but d'obtenir une boisson rafraîchissante fermentée à goût légèrement acide.

L'invention sera en outre illustrée, sans pour autant être limitée, par les figures et les exemples suivants.

Figure 1: est un schéma général d'un dispositif pour la mise en oeuvre du procédé.

Figure 2: est un diagramme illustrant l'effet du prétraitement thermique par micro-ondes de la tige de canne à sucre entière sur l'absorbance à différentes longueurs d'ondes du jus de canne à sucre frais obtenu selon le procédé de l'invention.

Figure 3: est un diagramme illustrant l'effet de la durée du prétraitement thermique par micro-ondes de la tige de canne à sucre entière sur l'activité polyphénol oxydase (PPO) dans le jus de canne à sucre frais obtenu selon le procédé de l'invention.

Figure 4: est un diagramme illustrant l'effet d'un vieillissement accéléré du filtrat sur l'absorbance à 420 nm.

Figure 5: est un diagramme illustrant l'effet d'un vieillissement accéléré du filtrat sur l'absorbance à 560 nm.

Figure 6 est un diagramme illustrant l'effet d'un vieillissement accéléré du filtrat sur son absorbance à 720 nm.

### EXEMPLE 1 :

### Caractéristiques de l'installation de filtration tangentielle

### 1) Caractéristiques du dispositif pilote

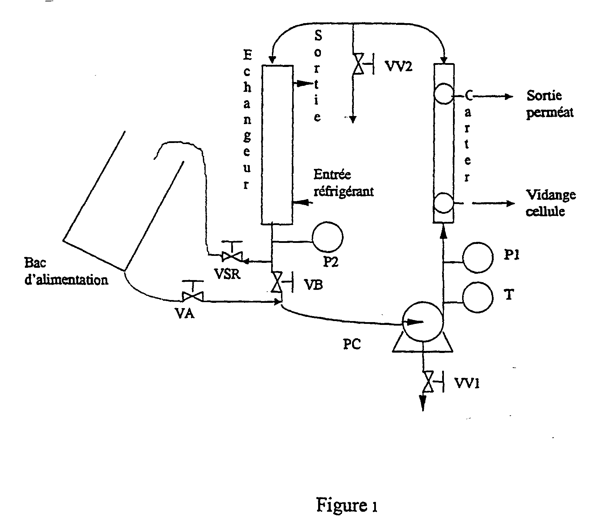

Il s'agit d'un pilote modèle Tamilab 1000 (représenté à la figure 1). Ses caractéristiques sont les suivantes :

- fonctionnement prévu : discontinu (batch) ;
- pression de transfert : entre 1 et 3,5 bar ;
- température : entre 10 et 85°C ;
- système de contrôle :

  ◊ manomètre amont 0/6 bar (P1) (tout inox type F ¼ G avec glycérine BOURDON),
  ◊ manomètre aval 0/6 bar (P2) (tout inox type F ¼ G avec glycérine BOURDON),
  ◊ thermomètre de boucle 0-120°C (T) (tout inox BOURDON) ;

- pompe d'alimentation : pompe centrifuge (1000 l/h - 3,5 bar) moteur 0,75 kW - 220/380 V/triphasé - 50 Hz - 3000 tr/min. (PC) ;
- dispositif d'action sur les paramètres de la filtration (vannes manuelles) :

  ◊ vanne d'alimentation VA (entre bac d'alimentation et pompe de circulation),
  ◊ vanne de sortie du rétentat VSR (après le module de filtration entre l'échangeur et le bac d'alimentation),

- échangeur thermique : échangeur tubulaire à 7 tubes d'une surface totale d'échange de 0,158 m² ;
- matériau de construction : acier inox 316 L pour toutes les parties métalliques en contact avec le produit.

## 2) Caractéristiques des membranes

L'installation comprend un carter prévu pour recevoir une membrane tubulaire CERAM *INSIDE*® de la société TAMI Industries ZA Les Laurons 26 110 NYONS. Ces membranes sont multicanales, en céramique. Elles ont une longueur de 1200 mm, un diamètre externe de 10 mm. Les canaux de la membrane sont au nombre de 3 et en forme de " trèfle ". Selon le constructeur, chacun des canaux a un diamètre hydraulique de 3,6 mm. La surface membranaire est de 0,045 m$^2$. Le support filtrant est une structure asymétrique et composite. La zone filtrante est en oxyde de zirconium, le support poreux est lui en alumine. Le filtrat s'écoule à travers la membrane, puis chemine dans le support poreux pour sortir en périphérie.

Deux jeux de membranes ont été utilisés:

- un jeu de 4 membranes de microfiltration ayant des diamètres respectifs de pores de 0,14 ; 0,2 ; 0,45 et 0,8 µm ;
- un jeu de 4 membranes d'ultrafiltration ayant des seuils de coupure respectifs de 15 ; 50 ; 150 et 300 kg/mol.

## 3) Circulation des fluides

Le pilote fonctionne en discontinu, avec extraction totale du perméat et recyclage du rétentat (Figure 1).

Le bac d'alimentation est relié à la pompe de circulation centrifuge (PC); une vanne d'alimentation (VA) permet d'agir sur l'admission du liquide et donc sur la pression d'entrée en amont de la membrane (mesurée par P1).

Après la pompe, se trouve le thermomètre de boucle (T) et le manomètre amont du module (pression d'entrée) (P1) puis la cellule de filtration. Une vanne de purge VV2 située en partie haute du module permet de faire une purge d'air si nécessaire, et aussi sert pour la vidange du dispositif. Avant de parvenir au bac d'alimentation, le rétentat traverse un échangeur où un liquide chaud ou froid peut être mis en circulation afin de réguler sa température. La vanne de sortie du rétentat VSR permet d'agir sur la pression de sortie (donnée par P2).

Sur le carter contenant la membrane, deux orifices permettent d'extraire le perméat. La sortie basse sert à la vidange (le tuyau de sortie est maintenu pincé pendant la filtration), et la sortie haute à l'extraction du perméat. Pour les essais d'études, le filtrat peut être renvoyé dans le bac d'alimentation ou extrait. En règle générale, le filtrat est récupéré totalement, pour diverses utilisations (analyses, dégustation, fermentation,...).

Un schéma général de l'installation pilote est représenté à la Figure 1 :

P1 :     manomètre donnant la pression relative d'entrée P1
P2 :     manomètre donnant la pression relative de sortie P2
PC :     pompe centrifuge de circulation
T :       thermomètre
VA :     vanne d'alimentation
VB :     vanne de boucle
VSR :   vanne de sortie du rétentat
VV1 :   vanne de vidange
VV2 :   vanne de vidange pour purge d'air

Lors des essais de filtration, la pression transmenbranaire (∆ P) de travail était de 1 bar.

Par cycle de filtration, qui peut durer de 2 à 8 heures, le volume de jus mis en oeuvre était généralement de 12 litres ; ce qui correspond à une vingtaine de kilogrammes de canne à sucre. Le FRV (Facteur de Réduction Volumique) varie de 5 à 7. A 55 °C, avec une membrane de 0.14 µ, la durée du cycle de filtration est de l'ordre de 2 heures.

L'étape de filtration est préférentiellement réalisée à des températures comprises entre 40 et 55 °C.

## EXEMPLE 2:

### Analyse bactériologique du jus de canne à sucre frais obtenu par le procédé selon l'invention.

### 1. Matériels et Méthodes.

L'observation au microscope de jus filtrés et l'appréciation visuelle de leur tenue (apparition de trouble,...) au cours du stockage donnent une indication de la réduction de la charge microbienne que procure la filtration.

Une analyse plus précise de différents types de micro-organismes a été effectuée aux différentes étapes du procédé d'obtention d'un jus frais de canne à sucre selon l'invention. Dans ce but, ont été dénombrés à la fois les micro-organismes de la flore aérobie, les coliformes, les micro-organismes de la flore anaérobie sporulante, les bactéries lactiques et les levures.

Suivant la flore et les différentes formes de micro-organismes dont la présence est recherchée, les milieux de culture appropriés suivants sont utilisés :

| Flore | Milieu de culture |
|---|---|
| • Bactéries lactiques | De Man, Rogosa, Sharpe (MRS) BioMérieux SA - 69280 Marcy l'Etoile France |
| • Flore aérobie totale | Standard Methods Agar (PCA) BioMérieux SA - 69280 Marcy l'Etoile France |
| • Coliformes | Levine EMB Agar (EMB) Difco Laboratories - Detroit Michigan USA |
| • Anaérobies sporulantes | Brewer Thioglycollate Medium (BTM) Difco Laboratories Detroit Michigan USA |
| • Levures | Yeast Medium Broth (YMB) Difco Laboratories -Detroit Michigan USA |
| Tampon de dilution | eau physiologique NaCl : 8,5 g tryptone :1,0 g eau distillée : 1 l stérilisation 15 min. à 120°C. |

### Ensemencement, culture, dénombrement

L'échantillon à ensemencer est éventuellement dilué dans de l'eau physiologique.

Par milieu, il est réalisé deux dilutions, et pour une dilution trois ensemencements sont faits.

L'ensemencement (0,1 ml de l'échantillon) est fait par étalement sur boîte de Pétri. Les cultures se font à l'étuve à une température d'environ 33°C, pendant 3 jours et plus si nécessaire.

Les cultures anaérobies (sur milieux MRS et BTM) se font dans des jarres d'anaérobiose.

Les échantillons à ensemencer pour la culture de bactéries sporulantes (sur milieu BTM) subissent auparavant un thermochoc de 10 min. à 80°C au bain-marie.

Le dénombrement est fait par comptage des colonies.

### 2. Résultats:

Des analyses bactériologiques ont été réalisées respectivement sur l'extrait brut directement issu de l'étape de broyage, sur l'extrait brut décongelé après conservation à l'état congelé, sur l'extrait brut chauffé à température de filtration avant la filtration proprement dite, et enfin sur le jus de canne à sucre frais à l'issue de l'étape de filtration tangentielle réalisée avec des membranes filtrantes ayant un seuil de coupure croissant (de 150 kg/mol à 0,2 $\mu$m).

Les résultats sont représentés sur le tableau 1 ci-après.

TABLEAU 1

| Unités Formant Colonies (CFU), à différentes étapes du procédé d'obtention des jus. | | | | | | |
|---|---|---|---|---|---|---|
| | broyage | décongélation | chauffage | filtration 150 kg/mol | filtration 300 kg/mol | filtration 0,14 $\mu$m | filtration 0,2 $\mu$m |
| PCA flore aérobie | $> 10^9$ | | $10^3 - 10^3$ | 0 | 0 | 0 | 0 |
| EMB coliformes | $2.10^6$ | | 0 | 0 | 0 | 0 | 0 |
| BTM anaérobie sporulante | $5$ à $7\ 10^2$ | | 1 - 10 | 0 | 0 | 0 | 0 |
| MRS lactique | | $7.10^4$ à $5.10^5$ | 0 | 0 | 0 | 0 | 0 |
| YMB levures | | $10^4$ à $10^5$ | 0 | 0 | 0 | 0 | 0 |

On peut observer que de nombreux micro-organismes aérobies et anaérobies sont présents dans l'extrait brut de jus de canne à sucre après pression à sec, y compris des bactéries coliformes.

La présence en grand nombre de ces micro-organismes est expliquée en grande partie par les méthodes de récolte de la canne à sucre incluant un coupage et un stockage des tiges à même le sol, ce qui entraîne une colonisation rapide des tiges aussi bien en micro-organismes telluriques qu'en micro-organismes aériens.

Les résultats du tableau 1 indiquent que l'étape de chauffage avant filtration permet d'éliminer complètement les bactéries coliformes et de réduire de plusieurs ordres de grandeur le nombre de micro-organismes appartenant à la flore aérobie et à la flore anaérobie sporulante. L'étape de filtration tangentielle, quel que soit le diamètre moyen de pore ou le seuil aérobie et à la flore anaérobie sporulante. L'étape dé filtration tangentielle, quel que soit le diamètre moyen de pore ou le seuil de coupure caractérisant la membrane filtrante, permet d'éliminer complètement les bactéries initialement présentes dans l'extrait brut du jus de canne à sucre.

Les résultats du tableau 1 indiquent qu'une étape de congélation- décongélation de l'extrait brut issu directement du broyage des tiges de canne à sucre possède l'inconvénient d'introduire une contamination significative à la fois en bactéries lactiques et en levures. Aucun des micro-organismes recherchés n'est retrouvé dans le filtrat, quel que soit le diamètre moyen de pore ou le seuil de coupure de la membrane filtrante utilisée.

## EXEMPLE 3:

### Etude des valeurs des débits de filtration en fonction du type de membranes filtrantes utilisées.

### 1. Matériels et méthodes:

L'extrait brut issu du broyage par pression à sec des tiges de canne à sucre ayant subi un traitement thermique par micro-ondes préalable, a été soumis à une étape de microfiltration à la température de 55°C.

Les filtres suivants ont été utilisés:

- filtre ayant un seuil de coupure de 150 kg/mol,
- filtre ayant un seuil de coupure de 300 kg/mol
- filtre de diamètre moyen de pore de 0,14 $\mu$m
- filtre ayant un diamètre moyen de pore de 0,2$\mu$m

Tous les filtres sont commercialisés par la Société TAMI

### 2. Résultats:

Les résultats sont représentés sur le tableau 2 ci-après:

TABLEAU 2 :

| Débit du flux de filtrat pour des filtrations menées à 55°C,en fonction du type de membrane utilisée. | |
| --- | --- |
| **seuil de coupure ou diamètre de pore** | **J l.h-1.m-2** |
| 150 kg/mol | **63** |
| 300 kg/mol | **82** |
| 0,14 $\mu$m | **196** |
| 0,2 $\mu$m | **163** |

Comme l'indiquent les résultats du tableau 2, un débit de filtration optimal est obtenu avec le filtre possédant la membrane filtrante d'un diamètre moyen de pore de 0,14 $\mu$m.

**EXEMPLE 4:**

**Etude du changement de coloration et de turbidité de l'extrait brut de jus de canne à sucre en fonction de la durée du traitement thermique par micro-ondes.**

**1. Matériels et Méthodes:**

La couleur de l'extrait brut de jus de canne à sucre résultant du broyage par pression à sec des tiges entières de canne à sucre a été analysée après un traitement thermique par micro-ondes de durées croissantes des tiges de canne tronçonnées.

Par cycle de traitement par micro-ondes, le poids de canne à sucre tronçonnée traité avant broyage était d'environ 1 kg (+/- 10%).

Le four à micro-ondes utilisé était de la marque White-Westinghouse (Modèle KM 95 VW) d'une puissance de 1250 W.

**Mesure d'absorbance:**

Un spectrophotomètre ultra-violet/visible de la marque JASCO, modèle 7800 a été utilisé pour les mesures d'absorbance.

**2. Résultats:**

a) Evaluation de la couleur des jus en fonction de la durée du traitement thermique.

Les résultats du tableau 3 ci-après représentent la coloration perçue visuellement de l'extrait brut de jus de canne à sucre traité thermiquement par micro-ondes.

TABLEAU 3 :

| Coloration perçue visuellement de jus issus de cannes traitées thermiquement | | | | | | |
|---|---|---|---|---|---|---|
| durée (mn) | 0 | 1 à 3 | 4 | 5 | 6 à 12 | 15 |
| jus de R 570 | brun sombre | brun | brun vert | vert | vert jaune | vert jaune brun |

Les résultats indiquent que l'extrait brut après broyage par pression à sec de la canne à sucre de la variété R 570 a une couleur brun sombre, majoritairement due à un brunissement enzymatique rapide initié lors de l'étape de broyage. Un traitement de la tige entière de canne à sucre par micro-ondes pendant une durée de 4 minutes permet l'obtention d'un extrait brut de jus de canne à sucre après broyage à sec possédant une couleur brun vert. Un prétraitement par micro-ondes de la tige entière de canne à sucre pendant des durées respectives de 5 minutes et de 6 à 12 minutes permet l'obtention d'un jus brut de couleur respectivement vert et vert jaune tout à fait adaptée à la préparation de boissons à base de jus de canne à sucre frais.

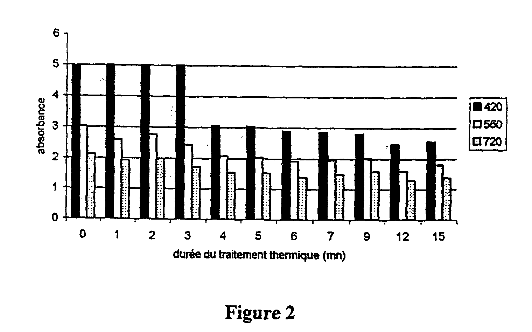

La figure 2 montre les valeurs d'absorbance de l'extrait brut de canne à sucre obtenu par broyage à sec ayant subi un prétraitement de la tige entière de la canne à sucre par micro-ondes pendant des durées de 1 à 15 minutes. Sont représentées les valeurs d'absorbance respectives à 420, et 560 nanomètres.

Les résultats de la figure 2 confirment tout à fait l'impression visuelle présentée dans le tableau 3 ci-dessus.

b) Evaluation de la turbidité des jus en fonction de la durée du traitement thermique.

La turbidité est la mesure de la dispersion d'un rayon visible par la solution. Cette dispersion est fonction du taux de particules, de leur nature et de leur taille (MEADE et CHEN, 1977). La turbidité évalue la limpidité d'un liquide. C'est une indication de la teneur en particules de la solution.

De manière courante, la mesure de turbidité se fait par Néphélométrie. Les turbidimètres sont étalonnés en Unités Néphélométriques de Turbidité (U.N.T.). Généralement l'étalon primaire utilisé pour la turbidité est une préparation de formazine (suspension aqueuse d'un polymère insoluble).

En sucrerie, selon la méthode ICUMSA, le trouble est évalué par la différence de densité optique à 720 nm des solutions avant et après filtration sur membrane de 0,45µm.

L'absorbance du jus de canne à 720 nm a été mesurée. Ces mesures ont permis d'établir une comparaison entre les jus.

Les résultats sont représentés sur la figure 2 et indiquent une légère diminution de la turbidité pour des durées croissantes de traitement thermique par micro-ondes.

**EXEMPLE 5:**

**Etude de l'effet du prétraitement thermique par micro-ondes de la tige de canne à sucre entière sur l'activité polyphénol oxydase dans l'extrait brut de jus de canne à sucre après broyage par pression à sec.**

**1. Matériels et Méthodes:**

**a) Traitement thermique:**

Le traitement thermique par micro-ondes a été réalisé dans les conditions décrites à l'exemple 4.

L'activité polyphénol oxydase a été testée selon la méthode suivante:

Pour le blanchiment des cannes entières (tronçonnées), le four à micro-ondes de ménage avait les caractéristiques suivantes :

| marque | White-Westinghouse |
|---|---|
| modèle | KM95VW |
| puissance | 1250 W |
| fréquence | 2450 MHz |
| plateau tournant | oui |

Par cycle de traitement, environ 1 kg (+/-10%) de cannes tronçonnées d'état physiologique équivalent est traité dans le four à micro-ondes à la puissance maximale, pendant des durées différentes.

Les durées de traitement sont comprises entre 0 (témoin) et 15 min. ; soit 0, 1, 2, 3, 4, 5, 6 , 9, 12 et 15 min..

Après chaque traitement thermique, les tronçons de canne sont refroidis en les plongeant dans un bain d'eau froide, puis broyés pour en extraire le jus.

On mesure les activités enzymatiques résiduelles.

**B) Mesure de l'activité polyphénol oxydasique.**

**Principe**

Le développement dans le temps de la coloration (jaune) qui apparaît par oxydation du catéchol en orthoquinone est suivie par spectrophotométrie à 420 nm.

**Technique opératoire**

Dans une cuve de spectrophotométrie, à 1 ml de tampon acétique N/100 à pH 5, on ajoute 0,1 ml de catéchol à 0,5 M. Après agitation, on ajoute 0,1 ml de la solution enzymatique (jus) convenablement diluée. On agite à l'air et on relève l'absorbance à intervalles de temps réguliers (10 à 30 secondes suivant rapidité de la réaction) pendant 3 à 6 min. Les réactifs : tampon, solution de catéchol et jus (enzyme) se trouvent à la température de la pièce (23 à 25°C).

**Préparation des réactifs**

- Tampon acétique N/100 à pH 5 : Ajuster au pH-mètre un volume de $CH_3COOH$ N/100 avec deux volumes de $CH_3COONa$ N/100.
- Solution de catéchol: dissoudre 550 mg de catéchol dans 10 ml d'eau distillée.

- 

## Calcul des résultats

On calcule:

$$A_{420} = f(t)$$

$A_{420}$     absorbance à 420 nm
t temps en minute

On obtient ainsi une droite (portion du début) dont la pente traduit l'activité.

$$\text{Activité (pour 0,1 ml de jus)} = \text{dilution}*\Delta(A_{420})/\ \Delta t$$

Activité en unité d'absorbance par min.

Une unité d'activité polyphénol oxydasique est, par certains auteurs, définie comme étant l'augmentation sous l'action de l'enzyme de l'absorbance de 0,001/min. (cité par ASQUIERI et *al.*, 1995).

Les activités des différents jus traités sont rapportées à celle du témoin non traité (considéré comme étant l'activité 100%). Les indications concernent donc des activités relatives (sans unité).

L'inactivation des PPO est représentée par le graphe :

$$\text{Activité relative} = f(\text{durée de traitement})$$

ou

$$Log(\text{Activité relative}) = f(\text{durée de traitement})$$

## Précautions

- Pour une bonne précision, on utilise des dilutions telles que les mesures soient réalisées dans une gamme de densités optiques (DO) comprise entre 0,3 et 0,6.

Il convient aussi de veiller à la constance des conditions opératoires : pH, température, solvant et de répéter les mesures en vue d'obtenir une valeur moyenne d'absorbance significative.

## 2. Résultats:

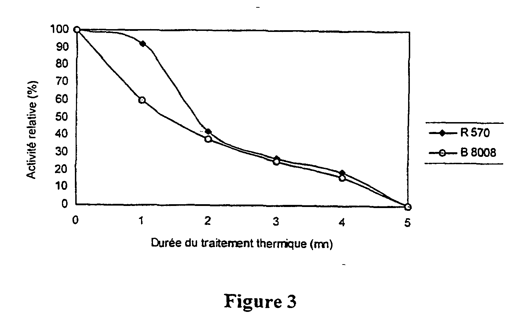

Les résultats de la figure 3 montrent que l'activité polyphénol oxydase, testée sur deux variétés différentes de canne à sucre respectivement la variété R570 et la variété B 8008, est significativement affectée par le traitement de la tige entière de canne à sucre par micro-ondes. Une durée du traitement par micro-ondes de 5 minutes est suffisante pour détruire complètement l'activité polyphénol oxydase.

L'activité polyphénol oxydase étant en partie responsable du brunissement du jus d'extrait brut après broyage, sa destruction due au traitement par micro-ondes est de nature à ralentir significativement, voire bloquer le brunissement observé sur les extraits bruts n'ayant pas subi de traitement thermique.

## EXEMPLE 6:

## Préparation d'une boisson fermentée à partir du jus de canne à sucre frais obtenu selon le procédé de l'invention.

Un jus de canne à sucre frais filtré selon le procédé de l'invention a été ensemencé avec une souche de *lactobacillus plantarum* référencée par la Société l'ALLEMAND S.A. (B.P. 4412-31405 Toulouse Cedex), à raison d'en-

viron 10$^7$ bactéries par millilitre. La fermentation a été conduite de manière aérobie à une température d'environ 35°C pendant une durée de 5 heures ou de 24 heures.

Après 5 heures de fermentation à 35°C, le jus de canne fermenté présentait un pH de 4,4, qui est un pH optimal du point de vue des propriétés organoleptiques pour une boisson pour la consommation humaine.

Après 24 heures de fermentation à 35°C, le jus de canne fermenté présentait un pH de 3,3, ce qui confère à la boisson un goût acide trop prononcé pour être facilement accepté par le consommateur.

Les mêmes conditions de fermentation ont été appliquées à deux variétés de canne à sucre, respectivement la variété B8008 et la variété R 570. A l'issue de la fermentation, les résultats tant du point de vue du pH final que des propriétés organoleptiques étaient équivalents.

## EXEMPLE 7:

### Etude d'un vieillissement accéléré à haute température d'un filtrat selon l'invention sur sa couleur et sa turbidité.

Les filtrats obtenus selon le procédé de l'invention avec des membranes filtrantes ayant des caractéristiques de seuil de coupure ou de diamètre moyen de pore varié a été exposé pendant des durées croissantes à la température de 100°C au bain-marie.

Les absorbances des filtrats ainsi traités ont été mesurées comme décrit aux exemples 4 et 5.

### 2. Résultats:

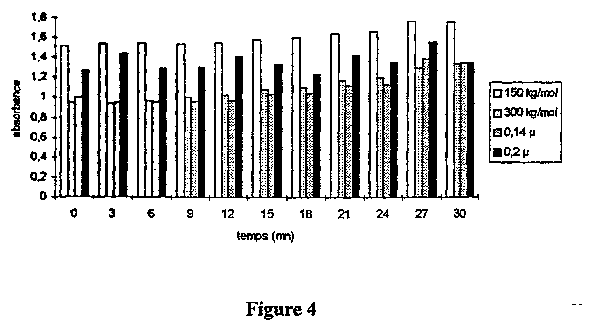

Les résultats de la figure 4 représentent des valeurs d'absorbance à 420 nm des filtrats obtenus à l'aide de quatre types de membranes filtrantes, puis traités thermiquement à 100°C pendant une durée variant de 0 à 30 minutes. La mesure à 420 nm rend compte de la coloration brune.

Ces résultats indiquent que, quelle que soit les caractéristiques de la membrane filtrante utilisée, un traitement par chauffage à 100°C n'a pas d'effet significatif sur les valeurs d'absorbance à 420 nm, et donc sur la couleur brune du filtrat.

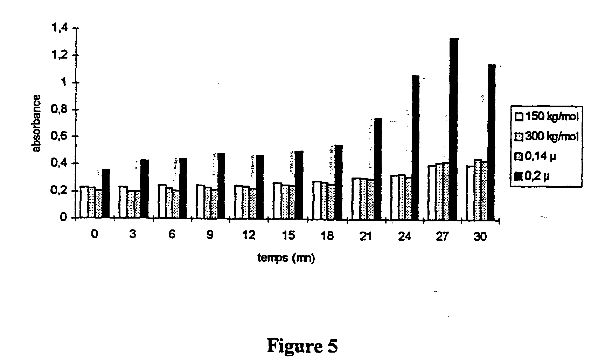

De même, les résultats de la figure 5 qui présente les valeurs d'absorbance à 560 nm des mêmes filtrats, rendent compte de façon globale de la coloration. Elles indiquent qu'aucun changement de couleur significatif pouvant être perçu par l'oeil n'est provoqué par un traitement thermique à 100°C des différents filtrats, quelle que soit la durée du traitement, sauf pour le filtrat obtenu avec la membrane de microfiltration d'un diamètre de pore moyen de 0,2 μm, pour lequel une augmentation significative de l'absorbance à 560 nm est observée au-delà de 20 minutes à 100°C.

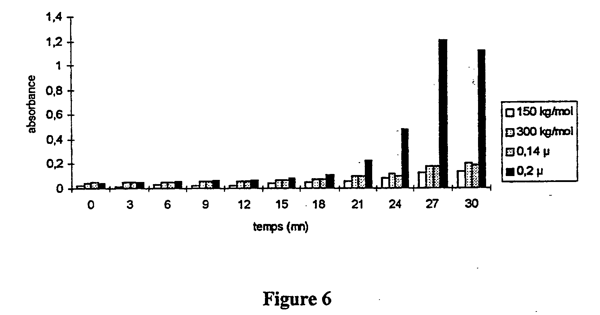

Les résultats de la figure 6 indiquent que la turbidité du filtrat (absorbance à la longueur d'onde de 720 nm) n'est pas significativement affectée par un traitement à 100°C de 30 minutes, sauf pour le filtrat obtenu avec une membrane filtrante d'un diamètre de pore moyen de 0,20 μm, pour lequel il a été observé une augmentation de la turbidité pour une durée du traitement supérieure à 21 minutes.

De manière générale, il peut donc être observé, au vu des résultats de l'expérience de simulation d'un vieillissement des filtrats obtenus selon le procédé de l'invention, que leurs stabilités de couleur et de turbidité sont particulièrement marquées.

De plus, lorsque l'on compare les mesures de turbidité (absorbance à 720 nm) de l'extrait brut (cf. figure 2, temps 0 minutes), aux mesures d'absorbance du filtrat de la figure 6, on peut observer que l'étape de filtration a permis une réduction quasi totale des particules colloïdales initialement contenus dans le jus issu du broyage à sec des tiges de canne à sucre.

Ainsi, les résultats de la figure 2 indiquent que l'absorbance à 720 nm de l'extrait brut est supériéure à 2 DO, alors qu'après filtration, quel que soit le type de membrane filtrante mise en oeuvre, l'absorbance à 720 nm est de l'ordre de 0,06 DO, pour les tests de vieillissement accéléré à 100°C, même après 15 minutes.

Pour ces conditions, l'étape de filtration tangentielle a donc permis une réduction d'environ 30 fois de la quantité de particules colloïdales initialement contenues dans l'extrait brut.

**Références Bibliographiques:**

• **ASQUIERI et al. (1995).** Concentrado natural de jugo de cana de azvcar. La alimentacion Latinoamericana, <u>209</u>: 29-34.

• **AIMAR P.** In: « Les séparations par membrane dans les procédés de l'industrie alimentaire ». Collection Sciences

**EP 1 165 843 B1**

et Techniques Agroalimentaires- Techniques et Documentations-Lavoisier, Paris, 1998.

- **BARON H. MANOU S. (1996):** La sélection variétale sur canne en Martinique: les dernières avancées en 1996. CTCS-Martinique.

- **BHUPINDER K. SHARMA KP. HARINDER K. (1991)** Studies on the development and storage stability of ready-to-serve bottled sugarcane juice. Intern. J. Trop. Agric. 9:2, 128-134.

- **HERVE D. (1994):** Production de sucre raffiné en sucrerie de canne. Industries Alimentaires et Agricoles; 111-7-8: 429-431.

- **KISHIHARA S. TAMAKI H. FUJI S. KOMOTO M. (1998):** Clarification of sugar solutions through dynamic membrane formed on a porous ceramic tube. J. Membr. Sci., 41, 103-114.

- **LANCRENON X., HERVE D., ROUSSET F. CARTIER S., (1998)** Impact des technologies de séparation sur la nouvelle raffinerie de canne. Ind. Alim. Agr., Juillet/Août , 75-78.

- **MEADE et CHEN (1977)** In: « Cane Sugar Handbook » A manual for cane sugar manufactures and their chemists ». Wiley-interscience, New-York.

- **PUNIDADAS P (1990) .** Microfiltration tangentielle sur membrane minérale de produits sucrés. Thèse de Doctorat Spécialité Génie des procédés de l'Ecole Nationale Supérieure des Industries Agricoles et Alimentaires. 128 p.

- **SIVASUBRAMANIAN C.G., PAI J.S. (1994).** Effect of heat treatments on the quality of sugarcane juice. Indian food packer, 48, 2, 51-54.

**Revendications**

1. Procédé d'obtention d'un jus frais de canne à sucre à propriétés améliorées, notamment une bonne stabilité de conservation, et apte à la préparation de boissons pour la consommation humaine, **caractérisé en ce qu'**il comporte au moins une étape de microfiltration tangentielle d'un extrait brut de canne issu d'une pression à sec, et **en ce que** l'étape de filtration tangentielle est réalisée avec une membrane filtrante d'un diamètre moyen de pore compris entre 0,05 et 0,2 μm à une température comprise entre 40°C et 65°C, de préférence entre 45°C et 60°C et de manière tout à fait préférée à environ 55°C.

2. Procédé selon la revendication 1, **caractérisé en ce que** l'étape de filtration tangentielle est réalisée avec une membrane filtrante d'un diamètre moyen de pore compris entre 0,09 et 0,17 μm et de manière tout à fait préférée d'environ 0,14 μm.

3. Procédé selon l'une des revendications 1 ou 2, **caractérisé en ce que** le filtre comprend une membrane filtrante inorganique, de préférence en céramique.

4. Procédé selon l'une des revendications 1 à 3, **caractérisé en ce que** l'étape de filtration tangentielle est précédée d'une étape de traitement thermique de la canne avant broyage.

5. Procédé selon la revendication 4, **caractérisé en ce que** le traitement thermique est réalisé par micro-ondes.

6. Procédé selon la revendication 4, **caractérisé en ce que** le traitement thermique est réalisé par la vapeur.

**Patentansprüche**

1. Verfahren zur Gewinnung eines Zuckerrohr-Frischsafts mit verbesserten Eigenschaften, insbesondere einer guten Konservierungsstabilität und Eignung zur Herstellung von Getränken für den menschlichen Verzehr, **dadurch gekennzeichnet, dass** es wenigstens einen Schritt der Tangentialmikrofiltration eines Zuckerrohr-Rohextrakts aus einem Trockenpressvorgang umfasst, dass der Schritt der Tangentialfiltration mit einer Filtermembran mit einem mittleren Porendurchmesser zwischen 0,05 und 0,2 μm bei einer Temperatur zwischen 40 °C, und 65 °C, vorzugsweise zwischen 45 °C und 60 °C und besonders bevorzugt bei ungefähr 55 °C durchgeführt wird.

2. Verfahren gemäß Anspruch 1, **dadurch gekennzeichnet, dass** der Schritt der Tangentialfiltration mit einer Filtermembran mit einem mittleren Porendurchmesser zwischen 0,09 und 0,17 µm und besonders bevorzugt ungefähr 0,14 µm durchgeführt wird.

3. Verfahren gemäß einem der Ansprüche 1 oder 2, **dadurch gekennzeichnet, dass** der Filter eine anorganische Filtermembran, vorzugsweise aus Keramik, umfasst.

4. Verfahren gemäß einem der Ansprüche 1 bis 3, **dadurch gekennzeichnet, dass** dem Schritt der Tangentialfiltration ein Schritt der thermischen Behandlung des Zuckerrohrs vor dem Mahlen vorausgeht.

5. Verfahren gemäß Anspruch 4, **dadurch gekennzeichnet, dass** die thermische Behandlung mit Mikrowellen erfolgt.

6. Verfahren gemäß Anspruch 4, **dadurch gekennzeichnet, dass** die thermische Behandlung mit Dampf erfolgt.


**Claims**

1. A method for obtaining a fresh sugar cane juice with improved properties, particularly good conservation stability and suitable for the preparation of beverages for human consumption, **characterized in that** it comprises at least one tangential filtration step of a raw extract of sugar cane derived from a dry pressing operation and **in that** the tangential filtration step is performed with a filtering membrane with an average pore diameter ranging from 0.05 to 0.2 µm at a temperature ranging between 40°C and 65°C preferably between 45°C and 60°C and more preferably at about 55°C.

2. A method according to claim 1, **characterized in that** the tangential filtration step is performed with a filtering membrane with an average pore diameter ranging from 0.09 to 0.17 µm, and more preferably of about 0.14 µm.

3. A method according to one of claims 1 or 2, **characterized in that** the filter comprises an inorganic filtering membrane, preferably made of ceramic.

4. A method according to one of claims 1 to 3, **characterized in that** the tangential filtration step is performed after a heat treatment step of the cane before crushing.

5. A method according to claims 4, **characterized in that** the heat treatment is made by a microwave process.

6. A method according to claim 4, **characterized in that** the heat treatment is made with steam.

Figure 1

**Figure 2**

**Figure 3**

**Figure 4**

**Figure 5**

**Figure 6**